# EUROPEAN PATENT APPLICATION

(11) **EP 0 895 039 A2**
(43) Date of publication of application: **03.02.1999**
(21) Application number: 98303414.1
(22) Date of filing: 30.04.1998
(51) Int. Cl.: F25D 11/00, F25D 17/06, F25D 29/00, F24F 13/16

(54) **A refrigerator**

(30) Priority: 31.07.1997 KR 9736293
(71) Applicant: Samsung Electronics Co., Ltd., Suwon-city, Kyungki-do (KR)
(72) Inventor: Park, Hae-jin, Kwonsun-gu, Suwon-city, Kyoungki-do (KR); Kim, Jae-in, Kangnam-gu, Seoul (KR)
(74) Representative: Geary, Stuart Lloyd

(57) **Abstract**

In a refrigerator, cool air is blown by a fan, through supply ports (13a), into a cooling compartment of a refrigerator. The temperature is sensed by sensors (121,122) and compared with a target temperature. The supply of cooling air is throttled (13, 16, 18, 103) in dependence on the comparison between the sensed temperature and the target temperature.

## Description

The present invention relates to a refrigerator.

To aid the understanding of the present invention, a refrigerator which it seeks to improve will now be described.

A refrigerator operates by condensing a refrigerant in a compressor, vaporising the refrigerant in an evaporator and cooling air by blowing it across the evaporator. The cooled air passes into the cooling compartment through a cool air duct comprising a plurality of cool air supply ports.

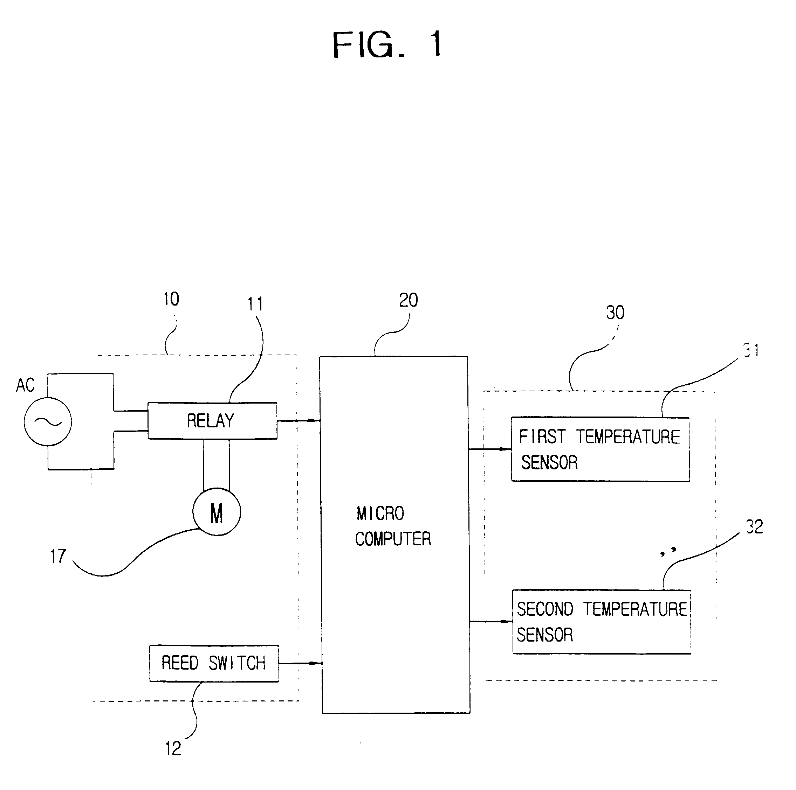

The supply of cool air into the cooling compartment may be regulated by a device that opens and closes the supply ports. Figure 1 shows a block diagram for a controller that drives the regulating device.

The controller comprises a temperature sensing unit 30, a microcomputer 20 and a driving unit 10. The temperature in the cooling compartment is measured by the temperature sensing unit 30 having first and second temperature sensors 31,32. The driving unit 10 drives the regulating device that opens and closes the air supply ports. The microcomputer 20 controls the driving unit 10 in response to the output of the temperature sensing unit 30.

The driving unit 10 comprises a driving motor 17, for driving the regulating device, a relay 11 for controlling supply of an alternating current from an external AC power source and a reed switch 12 for sensing the status of the regulating device.

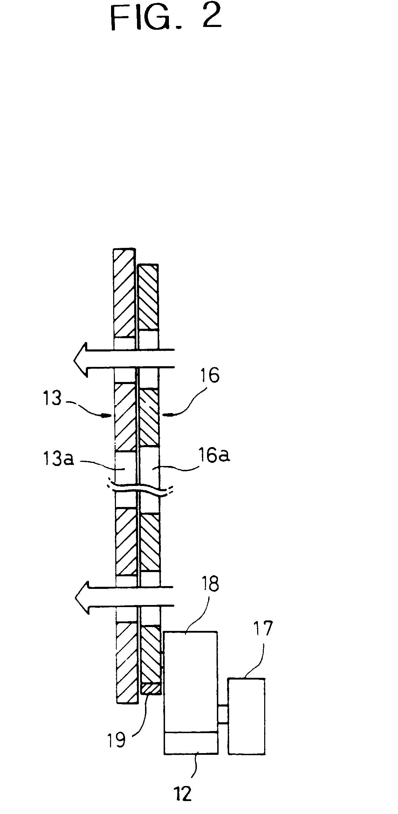

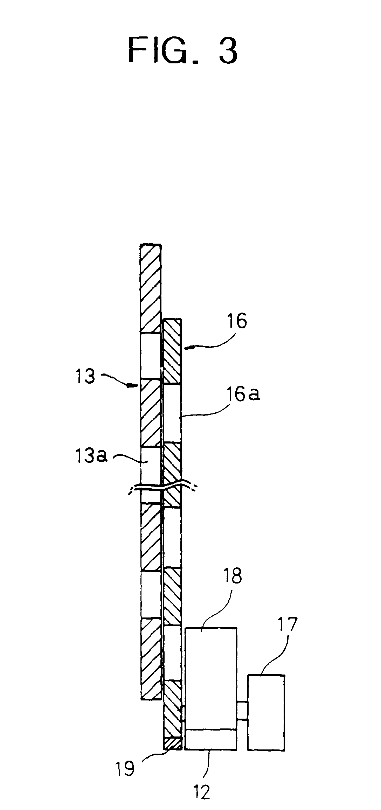

The regulating device of the refrigerator is shown in Figures 2 and 3. It comprises a duct member 13, a shutter 16 and a transmission system 18. The duct member comprises a plurality of cool air supply ports 13a into which the cool air flows from the evaporator. The shutter 16 is in close contact with the duct member 13 and is used for opening and closing the cool air supply ports 13a. The transmission system 18 transmits power from the driving motor 17 to the shutter 16.

The shutter 16 comprises a plurality of air holes 16a. Depending on the position of the shutter 16, the cool air supply ports 13a of the duct member 13 are either open, as shown in Figure 2, or closed, as shown in Figure 3.

The transmission system 18 comprises a cam and a plurality of gears. It converts the rotational movement of the driving motor 17 into a sliding movement of the shutter 16. The reed switch 12 is installed on part of the transmission system 18 and a magnet 19, for driving the reed switch 12, is mounted adjacently on the shutter 16. As shown in Figure 3, when the shutter 16 is moved downwards, due to the operation of the driving motor 17, the cool air supply ports 13a are closed and the reed switch is turned on by the magnet 19. The microcomputer 20 senses that the shutter 16 has closed and stops operating the driving motor 17.

The microcomputer 20 drives the shutter 16 depending on the temperature sensed by the temperature sensing part 30. In this way, the temperature of the cooling compartment is kept constant, by regulating the supply of cool air.

In addition, the refrigerator has a sensor to determine whether the door to the cooling compartment is open or closed. When the sensor detects that the door is 5 open, the driving motor 17 is driven, positioning the shutter 16 so as to close the cool air supply ports 13a. In this way, the supply of cool air to the cooling compartment can be halted when the door is opened. This prevents the loss of cool air, unnecessarily supplied to the cooling compartment.

In such a refrigerator, the supply of cool air is not efficiently controlled since the shutter 16 simply opens and closes the cool air supply ports 13a. Furthermore, when the door of the compartment is opened, cool air is lost since its supply is not stopped immediately. This is because opening and closing the shutter takes an appreciable amount of time.

It is an aim of the present invention to ameliorate these problems of the prior art described above.

According to the present invention, there is provided a method of supplying cooling air to a cooling compartment of a refrigerator, the method comprising the steps of sensing a temperature at a location in the cooling compartment 120 and throttling the flow of cooling air 13, 16, 103, 18 to the cooling compartment in dependence on the difference between sensed temperature 120 and target temperature. The throttling means need not be a throttle valve as such but may be any device capable of controlling the flow rate of the cooling air in the cooling air path.

Preferably, temperature should be sensed at a further location within the cooling compartment wherein said sensed temperature is an average of the temperatures sensed at said locations.

According to the present invention, there is also provided refrigerator including a cooling air path to a cooling compartment, a means for producing a flow of cooling in the cooling air path, a throttle means for throttling the supply of cooling air 13, 16, 103, 18, temperature sensing means for sensing temperature at a location in the cooling compartment and control means response to the output of the temperature sensing means to operate the refrigerator.

Preferably the throttle means comprises a cool air supply port 13a opening into the cooling chamber, a shutter 16, a motor 17, 103 and a transmission 18 for converting rotational movement of the motor into transitional movement of the shutter for blocking and unblocking said port.

Preferably the control means comprises a zero-crossing detector 101 for detecting time points at which an alternating current supplied to the driving motor 103 crosses zero, a triac 102 for controlling the supply of the alternating current to the driving motor 17, 103 and a microcomputer 110 for turning on the triac according to a number of pulses inputted to it from the zero-crossing detector, the number which corresponds to a time required for operating said motor.

Preferably the motor is a stepper motor.

An embodiment of the present invention will now be described, by way of example, with reference to the accompanying drawings, in which:
Figure 1 is a block diagram of a controller used to drive a device that regulates the supply of cool air to the cooling compartment;
Figures 2 and 3 are sectional views of the regulating device;
Figure 4 is a block diagram of a controller used to drive a device that regulates the supply of cool air to the cooling compartment, according to the present invention;
Figure 5 is a graph showing the input and output of the zero-crossing detector shown in Figure 4; and
Figure 6 is a flow chart showing the method of controlling the opening and closing of cooling supply ports according to the present invention.

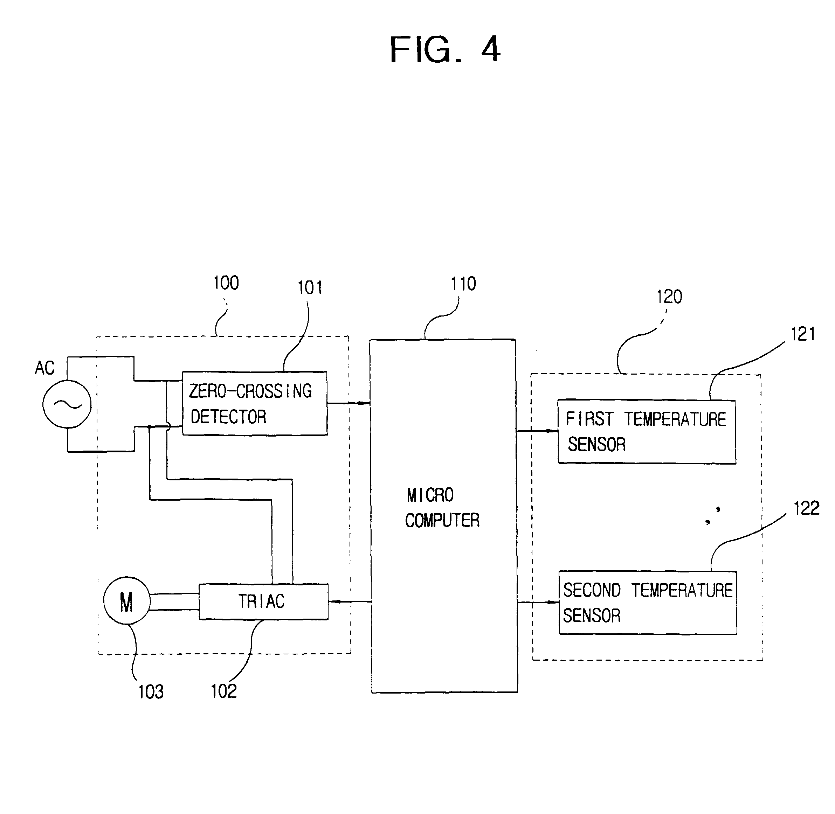

Referring to Figure 4, a controller that drives regulating device comprises a temperature sensing unit 120, a microcomputer 110 and a driving unit 100. The temperature sensing unit 120 includes first and second temperature sensors 121, 122. The driving unit 100 drives the regulating device to open and close the air supply ports (13a). The microcomputer 110 controls the driving unit 100 depending the output of the temperature sensing unit 120.

The driving unit 100 comprises a zero-crossing detector 101 for detecting the zero-crossing time points of an alternating current supplied from the external AC power supply, a driving motor 103 for driving the shutter member 16, and a triac 102 for 5 controlling the supply of the alternating current from the external AC power supply to the driving motor 103.

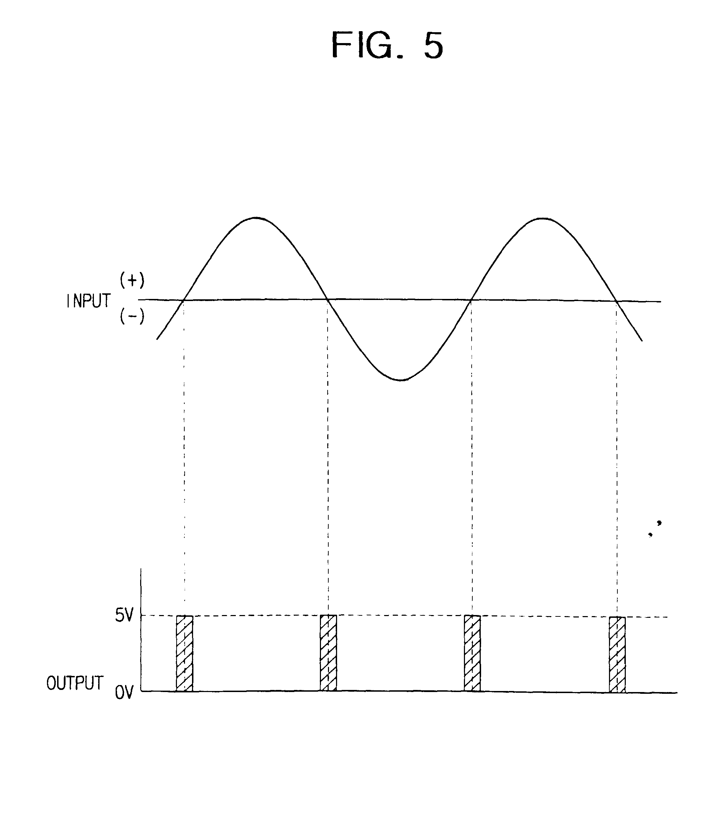

Referring to Figure 5, the alternating current from the external AC power supply is fed into the zero-crossing detector 101. The zero-crossing detector 101 detects the zero-crossing time points of the alternating current and generates pulses at the detected zero-crossing time points. The pulses generated from the zero-crossing detector 101 are supplied to the microcomputer 110.

The triac 102 drives the driving motor 103 according to commands from the microcomputer 110. When the triac 102 is turned on by the microcomputer 110, the alternating current is supplied to the driving motor 103 from the AC power supply. When the triac 102 is turned off, the alternating current supply to the motor 103 is stopped.

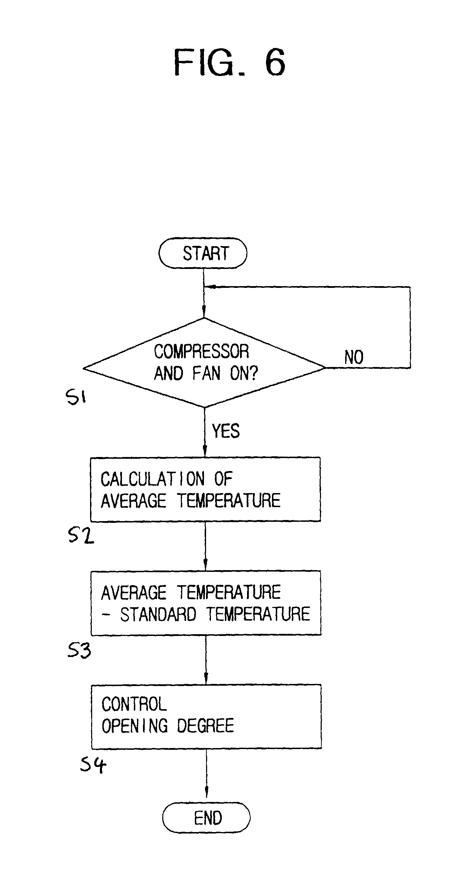

Referring to Figure 6, the microcomputer 110 detects whether the compressor and the fan are operating and determines whether cool air is being generated (step S1). If cool air is being generated, the microcomputer 110 calculates the average temperature inside the cooling compartment using the temperatures detected by the first and second temperature sensors 121, 122 (step S2).

The degree of cooling of the cooling compartment required is set by a user. The microcomputer 110 converts this set degree of cooling into a standard temperature. The microcomputer 110 calculates the difference between the average temperature and the standard temperature (step S3). On the basis of the calculated temperature difference, the microcomputer 110 determines the degree to which the cool air supply ports 13a should be opened (step S4).

The procedure by which the degree of opening of the shutter is controlled will now be described.

On the basis of the temperature difference, the microcomputer 110 calculates the degree to which the cool air supply ports 13a should be opened. The microcomputer 110 turns on the triac 102 according to the number of pulses input from the zero-crossing detector 101, during which time the driving motor 103 is driven. This time corresponds to the time required to open the cool air discharge ports 13a to the appropriate degree.

For example, if the driving motor 103 turns at a rotational velocity of 6 rpm and the driving motor 103 should be rotated by 36 degrees to open the cool air discharge ports 13a to the appropriate degree, the alternating current should be supplied to the driving motor 103 for one second. If the external AC power supply provides the driving motor 103 with mains at the US frequency of 60 Hz, one second corresponds to the sixty output pulses of the zero-crossing detector 101. Therefore, while the microprocessor 110 is supplied with sixty pulses, it turns on the triac 102 and the driving motor 103 rotates by 36 degrees exactly. In this way the degree to which the cool air supply ports 13a are opened is controlled exactly.

Thus, the temperature of the cooling compartment is exactly controlled by varying the amount of cool air supplied. The amount of cool air supplied is determined by the standard temperature and the real temperature of the cooling compartment.

Furthermore, in a conventional refrigerator, to prevent loss of the cool air when the refrigerator door is opened, the shutter 16 must move from a wholly open position to the closed position. However, according to the present invention, the shutter 16 normally sits in a partially open position. The degree to which it must move to a closed position is less and so the cool air ports 13a are closed more rapidly. In this way, the supply of cool air to the cooling compartment can be rapidly halted when the door is opened.

It will be appreciated that many modifications can be made to the embodiment described above.

## Claims

1. A method of supplying cooling air to a cooling compartment of a refrigerator, the method comprising the steps of:
sensing a temperature at a location in the cooling compartment (120); and
throttling the flow of cooling air (13, 16, 103, 18) to the cooling compartment in dependence on the difference between sensed temperature (120) and target temperature.

2. A method according to claim 1, including sensing temperature at a further location within the cooling compartment wherein said sensed temperature is an average of the temperatures sensed at said locations.

3. A refrigerator including a cooling air path to a cooling compartment, a means for producing a flow of cooling in the cooling air path, a throttle means for throttling the supply of cooling air (13, 16, 103, 18), temperature sensing means for sensing temperature at a location in the cooling compartment and control means response to the output of the temperature sensing means to operate the refrigerator according to claim 1 or 2.

4. A refrigerator according to claim 3 wherein the throttle means comprises a cool air supply port (13a) opening into the cooling chamber, a shutter (16), a motor (17, 103) and a transmission (18) for converting rotational movement of the motor into transitional movement of the shutter for blocking and unblocking said port.

5. A refrigerator according to claim 3 or 4, wherein control means comprises:
a zero-crossing detector (101) for detecting time points at which an alternating current supplied to the driving motor (103) crosses zero;
a triac (102) for controlling the supply of the alternating current to the driving motor (17, 103); and
a microcomputer (110) for turning on the triac according to a number of pulses inputted to it from the zero-crossing detector, the number which corresponds to a time required for operating said motor.

6. A refrigerator according to claim 4, wherein the motor is a stepper motor.

7. A refrigerator having a device for opening/closing cool air supply ports (13a), said device for controlling supply of cool air into a cooling compartment, said refrigerator comprising:
means for sensing a temperature (120) in said cooling compartment;
motor for driving said opening/closing device; and
a control part for controlling said motor so that an open degree of the cool air supply ports is controlled by said opening/closing device on the basis of a temperature difference between a standard temperature )f said cooling compartment and a sensed temperature of said cooling compartment sensed by aid temperature sensing means,

8. The refrigerator as claimed in claim 7, wherein said control part comprises:
a zero-crossing detector or detecting zero-crossing time points of an alternating current supplied to said motor;
a triac for controlling supply of the alternating current to said motor; and a microcomputer for turning said triac on according to the number of input pulses inputted thereto from said zero-crossing detector, the number which corresponds to a time required for operating said motor.

9. The refrigerator as claimed in claim 7, wherein said temperature sensing means comprises a plurality of temperature sensors installed in said cooling compartment, and the sensed temperature of said cooling compartment is an average value of the temperatures sensed by said temperature sensors respectively.

10. A method for controlling opening/closing operations of a device for opening/closing cool air supply ports in a refrigerator, said device for controlling supply of cool air into a cooling compartment, said method comprising the steps of:
sensing a temperature in aid cooling compartment calculating a temperature difference between a standard temperature of a cooling compartment and a sensed temperature of said cooling compartment;
calculating an open degree of the cool air supply ports by said opening/closing device on the basis of the temperature difference; and
performing opening/closing operation of the cool air supply ports by said opening/closing device accordion,; to the calculated open degree.

11. The method for controlling opening/closing operations as claimed in claim 10, wherein the temperature of said cooling compartment is an average value of temperatures respectively sensed at a plurality of positions in said cooling compartment.
